# EUROPÄISCHE PATENTSCHRIFT

(11) **EP 0 934 665 B1**
(45) Veröffentlichungstag und Bekanntmachung des Hinweises auf die Patenterteilung: **24.07.2002**
(21) Anmeldenummer: 97947707.2
(22) Anmeldetag: 24.10.1997
(51) Int. Cl.: H04Q 7/24, H04Q 7/38

(54) **VERFAHREN ZUR STEUERUNG VON VERMITTLUNGSTECHNISCHEN AKTIONEN IN EINEM MOBILFUNKSYSTEM UND EIN DERARTIGES MOBILFUNKSYSTEM**
METHOD OF CONTROLLING SWITCHING ACTIONS IN A MOBILE RADIOCOMMUNICATION SYSTEM AND A RADIOCOMMUNICATION SYSTEM OF THE SAME
PROCEDE DE COMMANDE D'ACTIONS DE COMMUTATION DANS UN SYSTEME DE RADIOCOMMUNICATION MOBILE ET SYSTEME DE RADIOCOMMUNICATION CORRESPONDANT

(30) Priorität: 25.10.1996 DE 19644458
(43) Veröffentlichungstag der Anmeldung: 11.08.1999
(73) Patentinhaber: SIEMENS AKTIENGESELLSCHAFT, 80333 München (DE)
(72) Erfinder: PLACHO, Markus, A-2073 Schrattenthal (AT); TOPUZOGLU, Eftat, A-2481 Achau (AT)
(86) Internationale Anmeldenummer: DE9702488
(87) Internationale Veröffentlichungsnummer: WO9819483

(56) Entgegenhaltungen:
- EP-A- 0 715 473
- WO-A-95/20299
- WO-A-95/28809
- WO-A-96/20570
- WO-A-96/20572
- DE-C- 19 515 558
- US-A- 5 153 904
- US-A- 5 329 578
- BJORNDAHL P ET AL: "CME20 - A TOTAL SOLUTION FOR GSM NETWORKS" ERICSSON REVIEW, Bd. 68, Nr. 3, 1. Januar 1991, Seiten 72-79, XP000233159
- ALVERHNE M ET AL: "GSM SERVICES AND FACILITIES FOR THE USER" PROCEEDINGS OF THE NORDIC SEMINAR ON DIGITAL LAND MOBILE RADIO COMMUNICATIONS (DMR), OSLO, JUNE 26 - 28, 1990, Nr. SEMINAR 4, 26. Juni 1990, Seiten 15.1 1-12, XP000515584 GENERAL DIRECTORATE OF POSTS AND TELECOMMUNICATIONS;FINLAND
- YEN S -L ET AL: "INTELLIGENT MTS MONITORING SYSTEM" PROCEEDINGS OF THE ANNUAL INTERNATIONAL CARNAHAN CONFERENCE ON SECURITY TECHNOLOGY, ALBUQUERQUE, OCT. 12 - 14, 1994, Nr. CONF. 28, 12. Oktober 1994, Seiten 185-187, XP000492127 SANSON L D

## Beschreibung

Die Erfindung betrifft ein Verfahren zur Steuerung von vermittlungstechnischen Aktionen in einem Mobilfunksystem bzw. ein derartiges Mobilfunksystem gemäß dem Oberbegriff des Patentanspruchs 1 bzw. des Patentanspruchs 19.

Bekanntlich weist ein Mobilfunksystem zumindest ein funktechnisches Teilsystem mit Basisstationssteuerungen und Basisstationen, die für Funkverbindungen von und zu Mobilstationen von Funkteilnehmern über eine Luftschnittstelle sorgen, ein vermittlungstechnisches Teilsystem mit Teilnehmerdatenbasen und Mobilvermittlungsstellen für leitungsvermittelte Verbindungen und ein Betriebs- und Wartungsteilsystem zum Verwalten und Steuern der im funktechnischen Teilsystem und im vermittlungstechnischen Teilsystem verteilt angeordneten Einrichtungen auf - siehe beispielsweise "D1 - Das Mobilfunk-Netz der Deutschen Telekom MobilNet", Unterrichtsblätter Jahrgang 49, 6/1996, Seiten 288 bis 297 oder "CME-A Total Solution for GSM Networks", Ericsson Review, Bd. 68, Nr. 3, 1991, Seiten 72 bis 79. Dabei werden die vermittlungstechnischen Aktionen, wie beispielsweise das Routen von Anrufverbindungen, das Erfassen der Anrufgebühren usw., einheitlich für alle in einer Teilnehmerdatenbasis registrierten Teilnehmer nur auf Grund der Teilnehmerrufnummer veranlasst.

In der WO 95/20299 ist ein GSM-Mobilfunksystem beschrieben, das individuelle Teilnehmerdienste - wie z.B. Zusatzdienste (Supplementary Services) - vorsieht, für die das Routen einer abgehenden Anrufverbindung durch eine zentrale Teilnehmerdatenbasis (HLR) auf Anforderung der Vermittlungsstelle entschieden wird. Für Zusatzdienste, betreffend ankommende Anrufverbindungen, liefert die Teilnehmerdatenbasis auf Anfrage der Vermittlungseinrichtung zusätzliche Routinginformationen, wobei die Teilnehmerdatenbasis gemäß einer Variante des Verfahrens zwischen mehreren Routingalternativen unterscheiden kann.

Die einzige Möglichkeit, vermittlungstechnische Aktionen, wie beispielsweise das Routen von Anrufverbindungen, einzelnen oder ausgewählten Funkteilnehmern flexibel zur Verfügung zu stellen, besteht darin, Absprachen zwischen dem Betreiber des Mobilfunksystems und dem Hersteller einer Systemkomponente zu treffen und entsprechend aufwendige Modifikationen in den bestehenden Verfahrensablauf einzuarbeiten. Eine flexible Administration bestehender oder neuer vermittlungstechnischer Aktionen ist verbunden mit gegebenenfalls langen Wartezeiten und mit einem für den Hersteller der Systemkomponenten erheblichen Aufwand an Bearbeitungskapazität. Dies hat zur Folge, dass die Realisierung insbesondere neuer Anforderungen der Systembetreiber hinsichtlich der Steuerung von vermittlungstechnischen Aktionen, wie z.B. der Einführung bestimmter Dienste für ausgewählte Teilnehmerkreise, und hinsichtlich Flexibilität und Erweiterung eines bestehenden Mobilfunksystems nicht ohne Mehraufwand der Systemkomponentenhersteller möglich ist.

Es ist Aufgabe der vorliegenden Erfindung, ein Verfahren und ein Mobilfunksystem der eingangs genannten Art anzugeben, durch das die vermittlungstechnischen Aktionen flexibler gesteuert und an die Anforderungen der Systembetreiber hinsichtlich Administration und Modifikation angepasst werden können.

Diese Aufgabe wird gemäß der Erfindung durch die Merkmale des Patentanspruchs 1 hinsichtlich des Verfahrens und durch die Merkmale des Patentanspruchs 19 hinsichtlich des Mobilfunksystems gelöst. Weiterbildungen der Erfindung sind in den Unteransprüchen angegeben.

Demnach werden über das Betriebs- und Wartungsteilsystem für einen oder mehrere Funkteilnehmer jeweils mobilfunkspezifische Daten zur Festlegung von Bedingungen für eine teilnehmerabhängige Steuerung der Aktionen in der Mobilvermittlungsstelle eingerichtet. Bei einem ankommenden oder abgehenden Anruf oder bei einer Nachrichtenübertragung werden anrufbezogene Daten und/oder teilnehmerspezifische Daten von der Mobilvermittlungsstelle in Bezug auf die Bedingungen ausgewertet und bei erfüllter Bedingung zumindest eine Aktion teilnehmerabhängig gesteuert. Ein Mobilfunksystem gemäß der Erfindung verfügt über eine Mobilvermittlungsstelle, in der die über das Betriebs- und Wartungsteilsystem jeweils bereitgestellten mobilfunkspezifischen Daten zur Festlegung von Bedingungen für eine teilnehmerabhängige Steuerung der Aktionen eingerichtet sind. Die Mobilvermittlungsstelle weist darüber hinaus Mittel auf, die bei einem ankommenden oder abgehenden Anruf oder bei einer Nachrichtenübertragung jeweils die anrufbezogenen Daten und/oder die teilnehmerspezifischen Daten in Bezug auf die Bedingungen auswertet und bei erfüllter Bedingung zumindestens eine Aktion teilnehmerabhängig steuert.

Der Vorteil der Erfindung liegt darin, dass das Routen der Anrufverbindungen, das Erfassen der Anrufgebühren usw., teilnehmerindividuell abhängig von bestimmten Daten - anrufbezogen und/oder teilnehmerspezifisch - ,die in Bezug auf die in der Mobilvermittlungsstelle gespeicherten Bedingungen ausgewertet werden, eingestellt und durchgeführt werden kann. Dies bedeutet für den Systembetreiber des jeweiligen Mobilfunksystems, dass er sehr flexibel über das Betriebs- und wartungsteilsystem für einzelne oder auch mehrere Funkteilnehmer die Kriterien und Parameter für die zu steuernden Aktionen teilnehmerindividuell in die Mobilvermittlungsstelle selbst eintragen und jederzeit wieder ändern kann. Absprachen zwischen Hersteller der Systemkomponenten und dem Systembetreiber bedarf es nicht mehr.

Als günstig hat sich erwiesen, die Bedingungen für die teilnehmerabhängige Steuerung der Aktionen entweder durch ein einzelnes anrufbezogenes/teilnehmerspezifisches Datum oder durch Verknüpfung mehrerer anrufbezogener/teilnehmerspezifischer Daten festzulegen. Weiterhin ist vorteilhaft, wenn bei mehreren erfüllten Bedingungen unterschiedliche vermittlungstechnische Aktionen teilnehmerabhängig gesteuert werden. Vorzugsweise werden Aktionen mit Prioritätsnummern versehen, die eine Reihenfolge der zu steuernden Aktionen bei parallelem Vorliegen mehrerer erfüllter Bedingungen angeben. Dies führt dazu, dass bei einem Anruf mehrere Aktionen teilnehmerabhängig gesteuert werden können und dabei auf Grund der den Aktionen zugeordneten Prioritätsnummern eine vorteilhafte Reihenfolge der vermittlungstechnischen Aktionen erzielbar ist.

Von Vorteil ist auch, wenn bei parallelem Vorliegen mehrerer erfüllter Bedingungen Sperrinformationen, durch die jeweils zumindestens eine Aktion durch eine andere Aktion von der teilnehmerabhängigen Steuerung ausgeschlossen wird, verwendet werden. Müssten beispielsweise auf Grund der erfüllten Bedingungen drei Aktionen durchgeführt werden, kann durch die Sperrinformationen erreicht werden, dass die zweite Aktion die erste Aktion ausschließt, so dass nur die zweite Aktion und die dritte Aktion durchzuführen sind. Mittels der Sperrinformationen besteht auch die Möglichkeit, dass eine Aktion gleichzeitig mehrere andere Aktionen von der Steuerung ausschließt.

Als anrufbezogene Daten, die in Bezug auf die Bedingungen ausgewertet werden, gelten beipielsweise gemäß einer Weiterbildung der Erfindung die Art des Anrufs (abgehender Anruf, ankommender Anruf, ankommender Anruf mit Anrufumlenkung) bzw. die Art der Nachrichtenübertragung (USSD-Containernachrichten). Als teilenmerspezifische Daten gelten gemäß einer anderen Weiterbildung der Erfindung die internationale Funkteilnehmerkennung (Internation Mobile Subscriber Identity), die Funkteilnehmerkategorie, das Diensteklassenzeichen (Service Class Mark) zum Triggern von Diensten eines Intelligenten Netzes und/oder die vom Funkteilnehmer nutzbaren Zusatzdienste.

Vorzugsweise werden bei einem abgehenden Anruf die vom Funkteilnehmer gewählte Teilnehmerrufnummer oder ein Nummernbereich dieser Teilnehmerrufnummer und bei einem ankommenden Anruf die im Mobilfunksystem vergebene Aufenthaltsrufnummer (Mobile Subscriber Roaming Number) oder ein Nummernbereich dieser Aufenthaltsrufnummer als mobilfunkspezifische Daten bewertet. Handelt es sich bei dem ankommenden Anruf um einen Anruf mit Anrufumlenkung zu einer Zielrufnummer, hat es sich als günstig erwiesen, auch die Zielrufnummer oder einen Nummernbereich dieser Zielrufnummer zur teilnehmerabhängigen Steuerung zumindestens einer vermittlungstechnischen Aktion zu bewerten.

Die bei erfüllten Bedingungen teilnehmerabhängig steuerbaren Aktionen betreffen außer dem Routen von Anrufverbindungen und dem Erfassen der Anrufgebühren vorteilhafterweise auch die Berechtigung bzw. Unterdrückung von Diensten/Leistungsmerkmalen, das Sperren von Anrufen oder das Unterdrücken einer Anrufumlenkung - gegebenenfalls mit einer Umleitung des Anrufs zu einer Ansageeinrichtung für eine bestimmte Ansage - das Einfügen von teilnehmerindividuellen Informationen zur Rufnummernmodifikation, das Abhören von Anrufverbindungen, das Umwerten eines vom Teilnehmer gewählten Kurzcodes in eine Rufnummer üblicher Länge. Besonders vorteilhaft ist die teilnehmerabhängige Steuerung einer Aktion, bei der eine Anrufverbindung zu einer Dienstesteuerungsstelle eines Intelligenten Netzes geroutet und dabei das Diensteklassenzeichen vor die Zielrufnummer gesetzt wird.

Die Erfindung wird anhand von Ausführungsbeispielen näher erläutert, die in den Figuren dargestellt sind. Im einzelnen zeigen
- Figur 1: in einem Blockschaltbild die grundsätzliche Struktur eines Mobilfunksystems,
- Figur 2: in einem Blockschaltbild das Einrichten von mobilfunkspezifischen Daten über das Betriebs- und Wartungsteilsystem in eine Mobilvermittlungsstelle des Mobilfunksystems,
- Figur 3: Beispiele für die Festlegung von Bedingungen für eine teilnehmerabhängige Steuerung vermittlungstechnischer Aktionen anhand der mobilfunkspezifischen Daten,
- Figur 4: in einem Blockschaltbild den Verfahrensablauf zur teilnehmerabhängigen Steuerung unterschiedlicher Aktionen in der Mobilvermittlungsstelle und
- Figur 5: eine Auschliessungstabelle für bestimmte Aktionen bei parallelem Vorliegen mehrerer erfüllter Bedingungen.

Ein Mobilfunksystem PLMN, basierend beispielsweise auf dem GSM-Standard, umfasst mehrere Grundelemente, die aus einem funktechnischem Teilsystem BSS, einem vermittlungstechnischem Teilsystem SSS und aus einem Betriebs- und Wartungsteilsystem OMS bestehen. Dabei übernimmt das funktechnische Teilsystem BSS die Übertragungs- und Steuerfunktionen für Kommunikationsverbindungen von bzw. zu Mobilstationen MS von Funkteilnehmern. Der gesamte Versorgungsbereich des Mobilfunksystems PLMN ist in eine große Anzahl von Funkzellen unterteilt, in denen die Verbindungen von und zu den Mobilstationen MS über Basisstationen BTS und Verbindungen von den Mobilstationen MS zu den Basisstationen BTS des Mobilfunksystems über eine Luftschnittstelle aufgebaut, aufrechterhalten und abgebaut werden können. Eine oder mehrere Basisstationen BTS werden von einer oder mehreren Basisstationssteuerungen BSC bedient. Die über den Gesamtversorgungsbereich des Mobilfunksystems verteilten Basisstationen BTS bilden Funkstationen, die alle jeweils am Antennenstandort erforderlichen Funktionen bereitstellen. Üblicherweise bedient die Basisstation BTS eine Funkzelle, die jedoch durch den Einsatz von Richtantennen in zwei oder mehr sektorierte Zellen aufgeteilt werden kann. Den intelligenten Teil des funktechnischen Teilsystems BSS bilden die Basisstationssteuerungen BSC, die die wesentlichen Steuerfunktionen bei der Funkverarbeitung übernehmen. Darüber hinaus bilden sie die Schnittstelle des funktechnischen Teilsystems BSS zu dem vermittlungstechnischem Teilsystem SSS dadurch, dass sie mit dessen Mobilvermittlungsstellen MSC verbunden sind.

Üblicherweise umfasst das vermittlungstechnische Teilsystem SSS mehrere Mobilvermittlungsstellen MSC, von denen jeweils die mobilfunkspezifischen Vermittlungsfunktionen zur Verbindungssteuerung durchgeführt werden. Dabei kann jede Mobilvermittlungsstelle MSC eine Verbindung zwischen dem Mobilfunksystem PLMN und einem Festnetz, beispielsweise dem öffentlichen Fernsprechnetz PSTN oder dem diensteintegrierenden Telekommunikationsnetz ISDN und einem anderen Mobilfunksystem PLMN' oder innerhalb des eigenen Mobilfunksystems PLMN zwischen jeweils zwei Mobilstationen MS vermitteln. Bei einer Verbindung zwischen zwei Mobilstationen MS innerhalb eines Mobilfunksystems wird die Verbindung von einer Mobilvermittlungsstelle zu einer anderen Mobilvermittlungsstelle oder innerhalb einund derselben Mobilvermittlungsstelle aufgebaut.

Für die Kommunikationsverbindungen zu anderen Telekommunikationssystemen weist das vermittlungstechnische Teilsystem SSS zumindestens eine Mobilvermittlungsstelle auf, die als Zugangs-Mobilvermittlungsstelle GMSC bezeichnet wird. Die Zugangs-Mobilvermittlungsstelle GMSC bildet im Mobilfunksystem PLMN somit die Schnittstelle für jeweils aus einem anderen Telekommunikationssystem ankommende Anrufe bzw. für jeweils zu anderen Telekommunikationssystemen abgehende Anrufe. Mit der jeweiligen Mobilvermittlungsstelle MSC ist eine von mehreren Teilnehmerdatenbasen, das Besucherregister VLR, in einem physikalischen Systemknoten realisiert, um die Teilnehmerdaten der in einem Versorgungsbereich der Mobilvermittlungsstelle sich aktuell aufhaltenden Funkteilnehmer für die Verbindungsbehandlung bereitzustellen. Darüber hinaus gibt es im vermittlungstechnischen Teilsystem SSS weitere Teilnehmerdatenbasen, von denen eine zentrale Teilnehmerdatenbasis, das Heimatregister HLR, die Teilnehmerdaten der im Mobilfunksystem registrierten Funkteilnehmer permanent speichert und darüber hinaus Informationen über die Zugangsberechtigung eines Funkteilnehmers zum Mobilfunksystem, sowie über das für den Punkteilnehmer auf Grund seines aktuellen Aufenthaltsorts zuständige Besucherregister VLR enthält. Mit dem funktechnischen Teilsystem BSS und mit dem vermittlungstechnischen Teilsystem SSS ist das Betriebs- und Wartungsteilsystem OMS verbunden, das zumindestens ein Betriebs- und Wartungszentrum OMC als Systemelemente aufweist. Das Betriebs- und Wartungszentrum OMC übernimmt Betriebs- und Wartungsfunktionen wie beispielsweise die zentrale Verwaltung der Netzelemente im funktechnischen Teilsystems BSS und im vermittlungstechnischen Teilsystem SSS, die Kommunikation zu diesen Netzelementen über beispielsweise ein Datennetz sowie die Kommunikation zwischen bestimmten Netzelementen des vermittlungstechnischen Teilsystems SSS und einem übergreifenden Betriebssystem. Darüber hinaus stellt das Betriebs- und Wartungsteilsystem OMS die Schnittstelle zwischen einem Mobilfunksystembetreiber und den jeweiligen Netzelementen des funktechnischen Teilsystems BSS und des vermittlungstechnischen Teilsystems SSS dar.

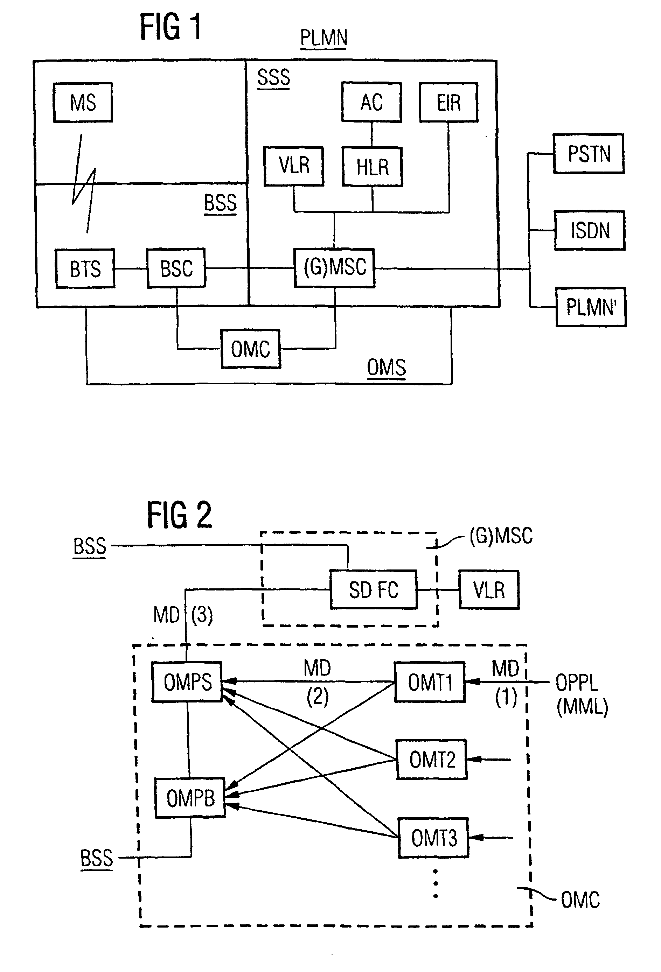

Figur 2 zeigt das Blockschaltbild eines Betriebs- und Wartungs-zentrums OMC (Operation and Maintenance Center), das gemäß Figur 1 sowohl Schnittstellen zum funktechnischen Teilsystem BSS als auch zum vermittlungstechnischen Teilsystem mit der Mobilvermittlungsstelle MSC bzw. der Zugangs-Mobil-Vermittlungsstelle GMSC aufweist. Das Betriebs- und Wartungszentrum OMC weist zumindestens einen Bedienungsprozessor OMPS zum zentralen Verwalten der Sytemelemente des vermittlungstechnischen Teilsystems und zumindestens einen Bedienungsprozessor OMPB zum zentralen Verwalten der Systemelemente des funktechnischen Teilsystems BSS auf. Neben ihren Betriebsund Wartungsfunktionen übernehmen die Bedienungsprozessoren OMPS und OMPB die Kommunikation zu den einzelnen Systemelementen - beispielsweise über ein paketvermitteltes Datennetz (PSDN, Packed Switched Data Network). Darüber hinaus verfügt das Betriebs- und Wartungs-zentrum OMC über Eingabeeinrichtungen OMT1, OMT2, OMT3..., die die Schnittstelle zwischen dem Systembetreiber OPPL des Mobilfunksystems und den Bedienungsprozessoren OMPS, OMPB und damit den Sytemelementen des funktechnischen Teilsystems BSS und des vermittlungstechnischen Teilsystems bilden. Die Eingabeeinrichtungen OMT1... können beispielsweise übliche Arbeitsplatzrechner (Workstations) sein, die mit den Funktionen einer grafischen Benutzeroberfläche und mit alphanumerischer Befehlseingabe realisiert sind. Die Eingabeeinrichtungen OMT1... sind jeweils mit den Bedienungsprozessoren OMPS, OMPB verbunden. An den Bedienungsprozessor OMPS des Betriebs- und Wartungs-zentrums OMC ist die Mobilvermittlungsstelle MSC (bzw. GMSC) des vermittlungstechnischen Teilsystems angeschlossen, die im vorliegenden Beispiel für die Anrufbehandlung bei ankommenden oder abgehenden Anrufen oder für die Nachrichtenübertragung bei Verwendung von Containernachrichten (USSD, Unstructured Supplementary Services Data) abhängig vom Aufenthaltsort des Funkteilnehmers gerade zuständig ist.

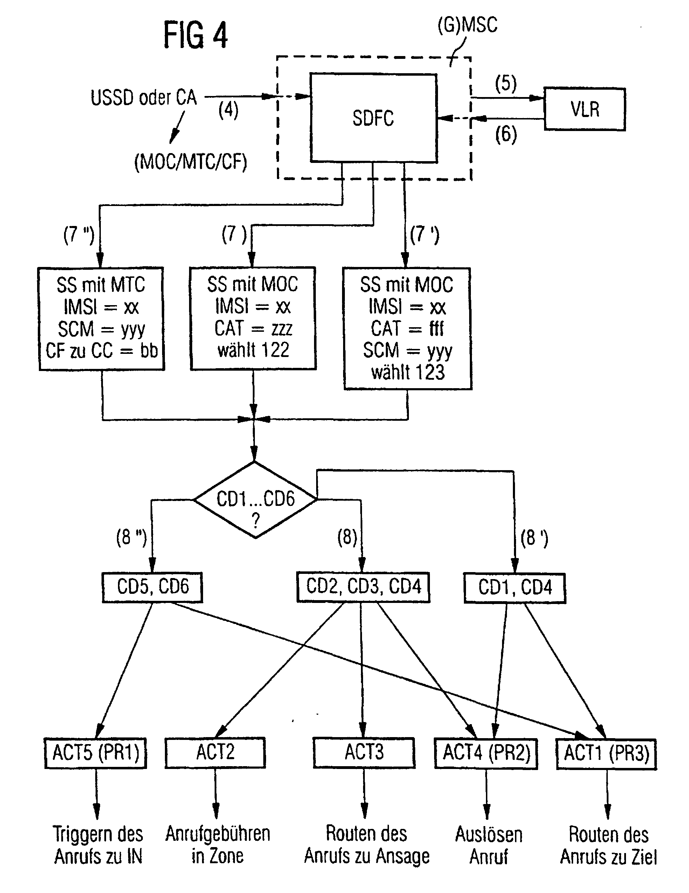

Die Mobilvermittlungsstelle MSC weist eine Steuer- und Kontrolleinrichtung SDFC (subscriber dependent processing and feature control) zur teilnehmerabhängigen Steuerung der vermittlungstechnischen Aktionen auf, die beispielsweise aus dem speziellen Routen von Anrufverbindungen, aus dem teilnehmerabhängigen Erfassen der Anrufgebühren oder beispielsweise aus der teilnehmerabhängigen Berechtigung bzw. Unterdrückung von Diensten und/oder Leistungsmerkmalen bestehen (siehe hierzu die in Figur 4 beschriebenen Beispiele im einzelnen). Über das Betriebs- und Wartungsteilsystem, vorzugsweise über das Betriebs- und Wartungszentrum OMC, werden mobilfunkspezifische Daten MD für einen oder mehrere Funkteilnehmer bereitgestellt und zur Festlegung von Bedingungen für die teilnehmerabhängige Steuerung der vermittlungstechnischen Aktionen in der Mobilvermittlungsstelle MSC eingerichtet. So werden die mobilfunkspezifischen Daten MD für den jeweiligen Funkteilnehmer beispielsweise teilnehmerindividuell vom Systembetreiber OPPL des Mobilfunksystems über MML-Befehle (Man Machine Language-Befehle) in die Eingabeeinrichtungen OMT1... eingegeben (1) und von dort an den Bedienungsprozessor OMPS übertragen (2). Über die zwischen dem Betriebs- und Wartungszentrum OMC und den Mobilvermittlungsstellen bestehende Schnittstellen gelangen die mobilfunkspezifischen Daten MD zur Steuer- und Kontrolleinrichtung SDFC der Mobilvermittlungsstelle MSC (3). Vorzugsweise werden alle Mobilvermittlungsstellen MSC im Mobilfunksystem jeweils mit einer Steuer- und Kontrolleinrichtung SDFC ausgestattet, um die teilnehmerabhängige Steuerung der vermittlungstechnischen Aktionen unabhängig vom momentanen Aufenthaltsort des Funkteilnehmers bewirken zu können. Anhand der über das Betriebs- und Wartungsteilsystem eintreffenden mobilfunkspezifischen Daten MD werden - in der Regel mehrere - Bedingungen für die teilnehmerabhängige Steuerung der vermittlungstechnischen Aktionen in der Mobilvermittlungsstelle MSC festgelegt und eingerichtet. Von der Steuer- und Kontrolleinrichtung SDFC werden bei einem Anruf und/oder für den Fall einer Nachrichtenübertragung anrufbezogene Daten und/oder teilnehmerspezifische Daten in Bezug auf die Bedingungen ausgewertet und anschließend bei erfüllter Bedingung bzw. erfüllten Bedingungen eine oder mehrere Aktionen speziell für den vom Anruf bzw. von der Nachrichtenübertragung betroffenen Funkteilnehmer speziell gesteuert.

Wie bei jeder Anrufbehandlung bzw. Nachrichtenübertragung werden die Teilnehmerdaten des Funkteilnehmers, die für die Dauer seines Aufenthalts im Versorgungsbereich des Besucherregisters gespeichert werden, abgefragt. Zu den Teilnehmerdaten gehören beispielsweise die internationale Mobilteilnehmerrufnummer (IMSI), die vom Punkteilnehmer nutzbaren Dienste und Zusatzdienste (Supplementary Services), die Aufenthaltsdaten in Form einer Aufenthaltsbereichskennung (Location Area Identity), anrufbezogene Daten wie beispielsweise Anrufumlenkungsdaten bei einem im Mobilfunksystem ankommenden Anruf mit einer für den Funkteilnehmer eingestellten Anrufumlenkung (call forwarding) zu einer bestimmten Zielrufnummer sowie Sicherheitsdaten mit beispielsweise einem Verschlüsselungscode (Kc). Von dem Besucherregister wird beispielsweise bei einem ankommenden Anruf (Mobile Terminated Call) eine Aufenthaltsrufnummer (MSRN) auf Anforderung durch das Heimatregister vergeben, um die Anrufverbindung zu der Mobilvermittlungsstelle aufzubauen, von der die leitungsvermittelte Verbindung zum angerufenen Funkteilnehmer aufgebaut werden soll, und um die Teilnehmerdaten des Funkteilnehmers im jeweiligen Besucherregister VLR zu adressieren. Darüber hinaus kann der Funkteilnehmer anhand seiner Teilnehmerkategorie gekennzeichnet sein, die beispielsweise Angaben über eine mögliche Aktivierung/Deaktivierung des Abhörens der Anrufverbindung im Mobilfunksystem oder Angaben über die Art und Weise der Gebührenabrechnung beispielsweise von einem Debit-Zentrum enthält. Zu den für den Teilnehmer eingetragenen Daten gehört auch ein Diensteklassenzeichen (SCM, Service Class Mark) zum Triggern von Diensten eines Intelligenten Netzes. Eine oder mehrere Dienstesteuerungsstellen (SCP, Service Control Points) bilden im Intelligenten Netz jeweils einen Netzknoten zur zentralen Steuerung von Diensten im Zusammenwirken mit Dienstevermittlungsstellen (SSP, Service Switching Points). Die Dienstesteuerungsstelle wertet dabei Anfragen der Dienstevermittlungsstellen aus, ermittelt Zielrufnummern und stellt die Anrufverbindungen an der Schnittstelle zwischen Mobilvermittlungsstelle MSC und Dienstesteuerungsstelle (SCP) her. Dabei kann das Diensteklassenzeichen SCM aus einer Rufnummer bestehen, die in dem für die Vergabe von Rufnummern begrenzten Nummernbereich vergeben wird.

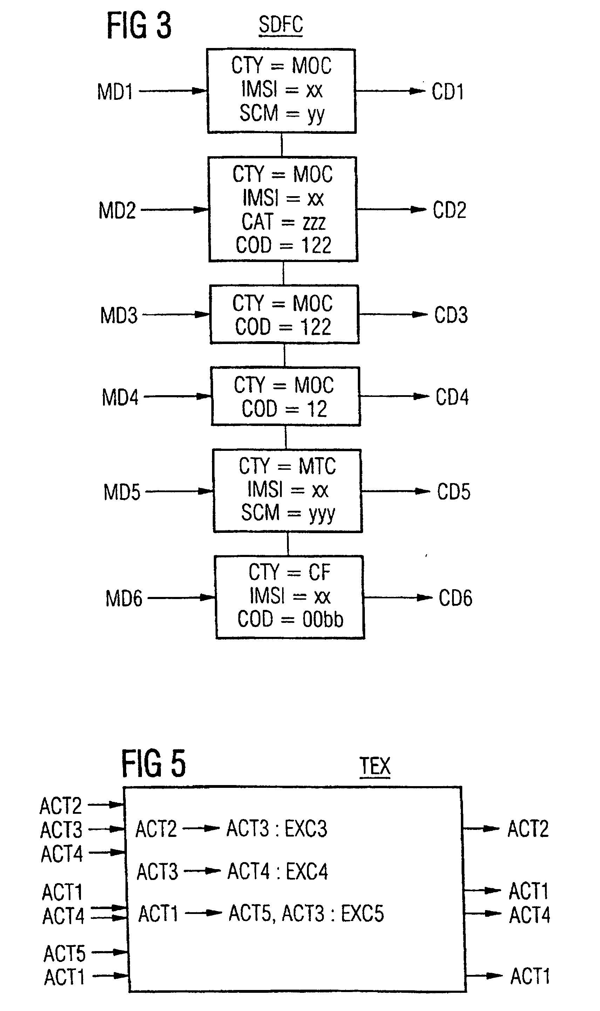

Figur 3 zeigt anhand von Beispielen die Festlegung verschiedener Bedingungen für die teilnehmerabhängige Steuerung vermittlungstechnischer Aktionen durch die jeweilige Mobilvermittlungsstelle bzw. die Steuer- und Kontrolleinrichtung SDFC in der Mobilvermittlungsstelle. Die mobilfunkspezifischen Daten und die daraus abgeleiteten Bedingungen werden vorzugsweise in einer Teilnehmerdatenbasis der Mobilvermittlungsstelle für den oder die Funkteilnehmer hinterlegt. In den dargestellten - insgesamt sechs - Beispielen werden jeweils mindestens zwei mobilfunkspezifische Eingangsdaten zu einer Bedingung verknüpft. Grundsätzlich ist es aber auch möglich, dass eine Bedingung lediglich auf ein einzelnes mobilfunkspezifisches Eingangsdatum zurückführbar ist. Die in den Beispielen aufgeführten mobilfunkspezifischen Daten sind nicht abschließend, sondern bilden lediglich Beispiele der möglichen Parameter, aus denen teilnehmerabhängige Bedingungen für die Steuerung vermittlungstechnischer Aktionen abgeleitet werden. Dabei können als mobilfunkspezifische Eingangsdaten sowohl teilnehmerspezifische Daten wie beispielsweise die internationale Mobilfunkteilnehmerrufnummer IMSI (International Mobile Subscriber Identity), das Diensteklassenzeichen SCM, die Teilnehmerkategorie CAT, als auch anrufbezogene Daten wie beispielsweise die Anrufart CTY und/oder Nummernbereiche COD von Rufnummern verwendet werden. Außer den genannten und in den Beispielen von Figur 3 dargestellten mobilfunkspezifischen Daten sind beispielsweise die Länge der Rufnummer - beispielsweise der Aufenthaltsrufnummer bei einem ankommenden Anruf oder der Zielrufnummer bei einem ankommenden Anruf mit Anrufumlenkung oder der bei einem abgehenden Anruf gewählten Rufnummer - oder eine Information über die Registrierung des Funkteilnehmers im eignen Mobilfunksystem oder in einem anderen Kommunikationssystem - beispielsweise einem anderen Mobilfunksystem - oder ein Hinweis über die Herkunft der Teilnehmerrufnummer bei einem ankommenden Anruf - beispielsweise vom Teilnehmer oder von einer Dienstesteuerungsstelle des Intelligenten Netzes oder durch Umwertung eines vom Teilnehmer gewählten Kurzcodes erhaltenen Rufnummer - von der Mobilvermittlungsstelle auswertbar.

So ergibt sich in den dargestellten Beispielen aus den mobilfunkspezifischen Daten MD1 eine Bedingung CD1, wenn es sich um einen abgehenden Anruf CTY=MOC (Mobile Originated Call) mit einer internationalen Mobilteilnehmerrufnummer IMSI=xx und einem Diensteklassenzeichen SCM=yy handelt. Ein weiteres Beispiel liefert eine Bedingung CD2 anhand mobilfunkspezifischer Daten MD2, die aus der Anrufart CTY=MOC, der internationalen Mobilteilnehmerrufnummer IMSI=xx, einer Teilnehmerkategorie CAT=zzz und aus einem Nummernbereich COD=122 für die gewählte Rufnummer bestehen. Eine Bedingung CD3 wird durch die mobilfunkspezifischen Daten MD3 festgelegt, bei denen die Anrufart CTY=MOC mit dem Nummernbereich COD=122 UNDverknüpft wird. Ebenso ergibt sich eine weitere Bedingung CD4 aus der UND-Verknüpfung lediglich zweiter mobilfunkspezifischer Daten MD4, die aus dem Anruftyp CTY=MOC und aus dem Nummernbereich der gewählten Rufnummer COD=12 bestehen. Eine Bedingung CD5 ergibt sich aus mobilfunkspezifischen Daten MD5, die den Anruftyp CTY=MTC (Mobile Terminated Call), die internationale Mobilteilnehmerrufnummer IMSI=xx und das Diensteklassenzeichen SCM=yyy als Parameter für die teilnehmerabhängige Bedingung enthalten. Das letzte Beispiel bezieht sich auf eine Bedingung CD6, die sich aus mobilfunkspezifischen Daten MD6 ergibt, bestehend aus dem Anruftyp CTY=CF (Call Forwarding), der internationalen Mobilteilnehmerrufnummer IMSI=xx und einem Nummernbereich COD=00bb, an dem das Anrufziel auf Grund der bei dem ankommenden Anruf für den Funkteilnehmer eingestellten Anrufumlenkung ablesbar ist. Die Bezeichnungen xx, yy, zzz und bb stellen lediglich Platzhalter für die zu berücksichtigenden Ziffern der Rufnummern oder für Teile des Diensteklassenzeichens bzw. der Teilnehmerkategorie dar.

Figur 4 zeigt in einem Blockschaltbild mit Ablaufdiagramm den Verfahrensablauf zur teilnehmerabhängigen Steuerung unterschiedlicher vermittlungstechnischer Aktionen durch die Steuer- und Kontrolleinrichtung SDFC der Mobilvermittlungsstelle MSC (bzw. GMSC). Dabei ist in die Anrufbehandlung die Zugangs-Mobilvermittlungsstelle (GMSC) dann eingeschaltet, wenn es sich um einen ankommenden Anruf MTC, beispielsweise aus dem öffentlichen Fernsprechnetz - gegebenenfalls ergänzt um eine Anrufumlenkung CF - handelt. In den Fällen eines abgehenden Anrufs MOC ist die für den anrufenden Funkteilnehmer auf Grund seines Aufenthaltsorts aktuell zuständige Mobilvermittlungsstelle MSC für die Verbindungsbehandlung und die Steuerung der teilnehmerindividuell durchzuführenden vermittlungstechnischen Aktionen zuständig. Handelt es sich um einen Anruf CA der zuvor geschilderten Art oder um eine Nachrichtenübertragung USSD, bei der Informationen in Form von Containernachrichten übertragen werden, stellt die Mobilvermittlungsstelle MSC die Anrufverbindung zu dem vom Anruf CA bzw. der Nachrichtenübertragung USSD betroffenen Funkteilnehmer her. Dabei fragt die Mobilvermittlungsstelle MSC abhängig von den eintreffenden Rufinformationen (4) bzw. Nachrichteninformationen das zugehörige Besucherregister VLR ab (5), um die für den Funkteilnehmer gespeicherten Teilnehmerdaten zu erhalten (6).

Aus den anrufbezogenen Daten und den teilnehmerspezifischen Daten ermittelt die die Mobilvermittlungsstelle MSC, z.B. anhand der Steuer- und Kontrolleinrichtung SDFC, ob die zur teilnehmerabhängigen Steuerung der vermittlungstechnischen Aktionen festgelegten Bedingungen erfüllt sind. Zu diesem Zweck werden die anrufbezogenen Daten und/oder die teilnehmerspezifischen Daten von der Steuer- und Kontrolleinrichtung SDFC zuvor in Bezug auf die Bedingungen ausgewertet. Figur 4 zeigt zu diesem Zweck drei Ausführungsbeispiele für die teilnehmerabhängige Steuerung unterschiedlicher Aktionen entsprechend der mobilfunkspezifischen Eingangsdaten bei einem ankommenden Anruf bzw. bei einem abgehenden Anruf. Zentraler Bestandteil des Verfahrensablaufs ist eine Abfrage durch die Steuer- und Kontrolleinrichtung SDFC, ob eine der in Figur 3 beschriebenen Bedingungen CD1...CD6 zutrifft und somit zumindestens eine vermittlungstechnische Aktion teilnehmerabhängig gesteuert wird. Beim ersten Beispiel (7) handelt es sich um einen abgehenden Anruf MOC, der von einem Funkteilnehmer SS initiiert wird. Dabei ruft der Funkteilnehmer mit der internationalen Mobilfunkteilnehmerrufnummer MC=xx und für Teilnehmerkategorie CAT=zzz eine Rufnummer an, die mit dem Nummernbereich 122 beginnt. Durch Überprüfung der eingerichteten Bedingungen erkennt die Steuer- und Kontrolleinrichtung SDFC, dass mehrere Bedingungen CD2, CD3 und CD4 parallel erfüllt sind (8)- siehe auch Figur 3. Vorteilhafterweise führt jede der Bedingungen CD2...CD4 auf eine andere vermittlungstechnische Aktion, die speziell für den anrufenden Funkteilnehmer durchzuführen ist. In einem zweiten Beispiel (7') handelt es sich bei dem Anruf ebenfalls um einen abgehenden Anruf MOC, bei dem der Funkteilnehmer SS mit der internationalen Mobilteilnehmerkennung IMSI=xx und einer anderen Teilnehmerkategorie CAT=fff eine Rufnummer wählt, die mit dem Nummernbereich 123 beginnt. Darüber hinaus ist für diesen Funkteilnehmer im Besucherregister ein Diensteklassenzeichen SCM=yyy eingetragen. Die Überprüfung der Daten für den vorliegenden abgehenden Anruf hinsichtlich der für einen oder mehrere Funkteilnehmer individuell eingerichteten Bedingungen ergibt als Ergebnis, dass die Bedingung CD1 und die Bedingung CD4 erfüllt sind (8').

Ein weiteres Beispiel (7'') bezieht sich auf einen ankommenden Anruf MTC, der an einen Funkteilnehmer mit der internationalen Mobilfunkteilnehmerrufnummer IMSI=xx und dem Diensteklassenzeichen SCM=yyy gerichtet ist. Darüber hinaus ist für den angerufenen Funkteilnehmer eine Anrufumlenkung CF zu einem Anrufziel eingerichtet, das durch die Landeskennzahl CC=bb festgelegt ist. Die Auswertung der teilnehmerspezifischen und/oder der anrufbezogenen Daten in Bezug auf die Bedingungen ergibt, dass die Bedingung CD5 und die Bedingung CD6 erfüllt sind (8'').

Für alle Beispiele sei angenommen, dass unterschiedliche vermittlungstechnische Aktionen aufgrund der erfüllten Bedingungen von der Mobilvermittlungsstelle MSC gesteuert werden. So folgt aus der erfüllten Bedingung CD1 eine vermittlungstechnische Aktion ACT1, die aus den Routen der Anrufverbindung zu einem bestimmten Anrufziel besteht. Dies hat den Vorteil, dass bei mehrdeutigen Rufnummern abhängig von der Länge der Rufnummern, erkennbar an dem jeweiligen Nummernbereich der Rufnummer, unterschiedliche Ziele angesteuert werden können. Dies ist für alle Arten von Anrufen -ob ankommender oder abgehender Anruf oder ankommender Anruf mit Anrufumlenkung- anwendbar. Das Vorliegen der Bedingung CD2 führt zu einer entsprechenden vermittlungstechnischen Aktion ACT2, bei der die Anrufgebühren für den Anruf teilnehmerabhängig in einer oder mehreren bestimmten Zonen erfasst werden. So erfolgt für die Gebührenerfassung die Verzonung abhängig von der internationalen Mobilteilnehmerrufnummer IMSI des Teilnehmers. Dies bewirkt, dass Anrufe teilnehmerabhängig je nach Mobilteilnehmerrufnummer unterschiedlich vergebührt werden können.

Die Bedingung CD3 führt auf eine vermittlungstechnische Aktion ACT3, bei der der Anruf zu einer Ansageeinrichtung geroutet wird, von der ausgewählte Ansagen, beispielsweise auch in unterschiedlichen Sprachen, zur Verfügung zu stellen. Die Bedingung CD4 führt zu einer vermittlungstechnischen Aktion ACT4, die aus dem Auslösen der Anrufverbindung besteht. Bei erfüllter Bedingung CD5 folgt teilnehmerabhängig die Steuerung der vermittlungstechnischen Aktion ACT 5, mit der die Anrufverbindung derart getriggert wird, dass eine Verzweigung zu einer Dienstesteuerungsstelle eines Intelligenten Netzes IN zur Nutzung zusätzlicher Dienste und/oder Leistungsmerkmale durchgeführt wird. Bei erfüllter Bedingung CD6 folgt teilnehmerabhängig ebenfalls die Steuerung der vermittlungstechnischen Aktion ACT 1.

Die in den Beispielen angegebenen Aktionen sind nicht abschließend, sondern nur eine Auswahl der möglichen vermittlungstechnischen Funktionen, die abhängig von den für den Funkteilnehmer eingerichteten Bedingungen flexibel ausgeführt werden können. Durch das Einrichten mobilfunkspezifischer Daten zur Festlegung der Bedingungen für die teilnehmerabhängige Steuerung vermittlungstechnischer Aktionen besteht für den Systembetreiber des Mobilfunksystems die Möglichkeit, die speziellen vermittlungstechnischen Aktionen für die jeweiligen Funkteilnehmer selbst flexibel zu veranlassen und jederzeit zu modifizieren. Werden mehrere Bedingungen in der Mobilvermittlungsstelle parallel eingerichtet und führen diese Bedingungen - wie im vorliegenden Beispiel - auf unterschiedliche Aktionen, so kann ggf. die Reihenfolge der auszuführenden Aktionen von Bedeutung sein. Daher kann jeder Aktion eine Prioritätsnummer zugewiesen werden, die eine Reihenfolge der zu steuernden vermittlungstechnischen Aktionen festlegt. So wird beispielsweise der vermittlungstechnischen Aktion ACT5 eine Prioritätsnummer PR1, der vermittlungstechnischen Aktion ACT4 eine Prioritätsnummer PR2 und der vermittlungstechnischen Aktion ACT1 eine Prioritätsnummer PR3 zugeordnet. Dies bedeutet, dass bei gleichzeitiger Erfüllung mehrerer Bedingungen die Aktion ACT5 vor der Aktion ACT4 und die ACT4 jeweils vor der Aktion ACT1 auszuführen ist. Im vorliegenden Beispiel werden den beiden vermittlungstechnischen Aktionen ACT2 und ACT3 keine Prioritätsnummern zugeteilt. Zusätzlich oder alternativ zur Vergabe der Prioritätsnummern kann bei parallelem Vorliegen mehrerer erfüllter Bedingungen in einer Tabelle angegeben werden, dass eine bestimmte Aktion zumindest eine weitere Aktion ausschließt. Treffen beispielsweise die Bedingungen für die vermittlungstechnischen Aktionen ACT1 und ACT3 parallel zu, kann durch Zuweisung einer Sperrinformation der Ausschluss von Aktion ACT3 durch die Aktion ACT2 bewirkt werden (siehe Figur5).

Da aus darstellerischen Gründen nicht alle teilnehmerabhängig steuerbaren vermittlungstechnischen Aktionen gezeigt werden können, seien die folgenden Aktionen noch genannt. Nur abhängig von der internationalen Mobilfunkteilnehmerrufnummer IMSI bzw. abhängig von einem Nummernbereich der Mobilfunkteilnehmerrufnummern IMSI kann ein abgehender Anruf durch einfaches Auslösen oder durch Umleitung zu einer Ansage gesperrt werden. Der Nummernbereich der Mobilfunkteilnehmernummer IMSI kann sich beispielsweise auf die Ziffern der Landeskennzahl (Country Code) und/oder der nationalen Kennzahl (National Code) beschränken. Die Nachrichtenübertragung mittels Containernachrichten USSD kann für bestimmte Teilnehmer, erkennbar an einem Numnernbereich der Mobilteilnehmerrufnummer IMSI, ebenfalls gesperrt werden. Abhängig von der Mobilteilnehmerrufnummer des angerufenen Funkteilnehmers bzw. deren Nummernbereich können ankommende Anrufe für den Funkteilnehmer ebenfalls ausgelöst oder zu einer Ansage umgeleitet werden. Ein weiteres Kriterium für das Sperren oder Umleiten des Anrufs besteht beispielsweise aus dem Aufenthaltsort des angerufenen Funkteilnehmers, erkennbar an der Aufenthaltsrufnummer (MSRN). Abhängig von der Mobilteilnehmerrufnummer des angerufenen Funkteilnehmers können Anrufumlenkungen bei ankommenden Anrufen unterdrückt werden, wobei zwischen einer Anrufumlenkung in der Zugangs-Mobilvermittlungsstelle (GMSC) und der Anrufumlenkung in der Besucher-Mobilvermittlungsstelle (Visited MSC) unterschieden werden kann. Gleichfalls können abhängig von der Mobilteilnehmerrufnummer des angerufenen Punkteilnehmers und abhängig von der Zielrufnummer bei einer Anrufumlenkung bzw. abhängig von Nummernbereichen der Zielrufnummer die Anrufumlenkung unterdrückt werden. Auch die Anrufumlenkung zu speziellen Anrufzielen, beispielsweise erkennbar an den Landeskennzahlen bestimmter Länder, kann unterdrückt und mit einer Umleitung zu einer Ansage oder mit dem Auslösen des Anrufs begleitet werden. Darüber hinaus ist die Vergabe der Diensteklassenzeichen SCM unabhängig vom jeweiligen Nummerierungsplan, bei dem das Diensteklassenzeichen SCM als eine Nummer im Ziffernumwerter der Mobilvermittlungsstelle üblicherweise einzurichten war. Dies hat den Vorteil, dass die Nummernbereiche, die durch das Diensteklassenzeichen SCM bisher belegt waren, für eine andere Anwendung frei sind. Ebenso braucht eine Verzonung anhand des Diensteklassenzeichens zur Vergebührung nicht mehr durchgeführt zu werden.

Durch das teilnehmerindividuelle Einrichten der mobilfunkspezifischen Daten, die Bedingungen für die teilnehmerabhängige Steuerung von vermittlungstechnischen Aktionen festlegen, besteht die Möglichkeit, in einem Mobilfunksystem Kurz-Codes zu vergeben, die mit denselben Ziffern beginnen, wie eine Teilnehmerrufnummer eines Funkteilnehmers, solange gewährleistet ist, dass der Kurz-Code und die Teilnehmerrufnummer sich in der Rufnummernlänge unterscheiden. Außerdem ist es durch die Erfindung möglich, abhängig von der Mobilteilnehmerrufnummer IMSI die Kurz-Codes zum zellenbezogenen oder teilnehmerbezogenen Routen von Anrufverbindungen zu verwenden. Eine andere vermittlungstechnische Aktion besteht in den speziellen Routen von Anrufverbindungen durch Modifikation der Rufnummer, indem teilnehmerspezifische Informationen in die modifizierte Rufnummer eingefügt werden. Diese teilnehmerspezifischen Informationen können beispielsweise aus der Aufenthaltsbereichskennung (Location Area Code/Cell ID) aus der Aufenthaltsrufnummer, aus der gewählten Teilnehmerrufnummer, aus der Länge der gewählten Rufnummer und/oder aus der nationalen Kennzahl (National Code) des Teilnehmers bestehen.

Figur 5 zeigt eine Tabelle TEX, die beispielsweise in der Steuer- und Kontrolleinrichtung der jeweiligen Mobilvermittlungsstelle implementiert ist. Die Tabelle TEX dient zum Ausschließen bestimmter Aktionen durch andere Aktionen, wobei durch eine Aktion zumindest eine weitere Aktion gesperrt wird. Aus diesem Grund werden Sperrinformationen den vermittlungstechnischen Aktionen zugeteilt, aus denen hervorgeht, welche weitere Aktionen durch sie ausgeschlossen sind. So legt eine Sperrinformation EXC3 fest, dass bei parallelem Vorliegen der Aktionen ACT2 und ACT3 die Aktion ACT2 die Aktion ACT3 ausschließt. Eine Sperrinformation EXC4 bewirkt das Ausschließen der Aktion ACT4 durch die Aktion ACT3. Eine Sperrinformation EXC5 veranlasst, dass durch die Aktion ACT1 mehrere Aktionen, nämlich die Aktion ACT3 und ACT5, gleichzeitig ausgeschlossen werden. Für die in Figur 4 angegebenen Beispiele bedeutet dies, dass die aufgrund der erfüllten Bedingungen durchzuführenden Aktionen ACT2, ACT3 und ACT4 nur die Aktion ACT2 ausgeführt wird. Ebenso gilt für die parallel ausführbaren Aktionen ACT5 und ACT1, dass lediglich die letztgenannte Aktion ACT1 möglich ist. Dagegen bleiben die beiden aufgrund der parallel erfüllten Bedingungen durchzuführenden Aktionen ACT1 und ACT4 von der Ausschließungstabelle TEX unberührt, so dass beide Aktionen - ggf. unter Berücksichtigung von zugewiesenen Prioritätsnummern - jeweils eine vermittlungstechnische Aktion nach sich ziehen.

## Patentansprüche

1. Verfahren zur Steuerung von vermittlungstechnischen Aktionen (ACT1...ACT5), wie z.B. das Routen von Anrufverbindungen oder das Erfassen von Anrufgebühren usw., in einem Mobilfunksystem (PLMN), das zumindestens ein funktechnisches Teilsystem (BSS) mit Basisstationssteuerungen (BSC) und Basisstationen (BTS) für Funkverbindungen von und zu Mobilstationen (MS) von Funkteilnehmern, ein vermittlungstechnisches Teilsystem (SSS) mit Teilnehmerdatenbasen (VLR. HLR) und Mobilvermittlungsstellen (MSC) für leitungsvermittelte Verbindungen und ein Betriebs- und Wartungsteilsystem (OMS) mit zumindestens einem Betriebs- und Wartungszentrum (OMC) zum Verwalten und Steuern der in dem funktechnischen Teilsystem (BSS) und in dem vermittlungstechnischen Teilsystem (SSS) vorgesehenen Einrichtungen aufweist,
**dadurch gekennzeichnet,**
**dass** über das Betriebs- und Wartungsteilsystem (OMS) für einen oder mehrere Funkteilnehmer jeweils mobilfunkspezifische Daten (MD) zur Festlegung von Bedingungen (CD1...CD6) für eine teilnehmerabhängige Steuerung der Aktionen (ACT1...ACT5) in der Mobilvermittlungsstelle (MSC) teilnehmerindividuell eingerichtet werden und
**dass** von der Mobilvermittlungsstelle (MSC) bei einem ankommenden Anruf (MTC) oder einem abgehenden Anruf (MOC) oder bei einer Nachrichtenübertragung (USSD) jeweils anrufbezogene Daten und/ oder teilnehmerspezifische Daten in Bezug auf die Bedingungen (CD1...CD6) ausgewertet und bei erfüllter Bedingung (CD2, CD3, CD4) zumindestens eine Aktion (ACT2, ACT3, ACT4) teilnehmerabhängig gesteuert werden.

2. Verfahren nach Anspruch 1,
**dadurch gekennzeichnet,**
**dass** die Bedingungen (CD1...CD6) für die teilnehmerabhängige Steuerung der Aktionen (ACT1...ACT5) jeweils durch ein einzelnes anrufbezogenes/teilnehmerspezifisches Datum oder durch Verknüpfung mehrerer anrufbezogener/teilnehmerspezifischer Daten festgelegt werden.

3. Verfahren nach Anspruch 2,
**dadurch gekennzeichnet,**
**dass** die Verknüpfung der anrufbezogenen/teilnehmerspezifischen Daten über eine logische UND-Verknüpfung und/oder über eine logische ODER-Verknüpfung erfolgt.

4. Verfahren nach einem der vorhergehenden Ansprüche,
**dadurch gekennzeichnet,**
**dass** bei mehreren erfüllten Bedingungen (CD2, CD3, CD4) unterschiedliche Aktionen (ACT2, ACT3, ACT4) teilnehmerabhängig gesteuert werden.

5. Verfahren nach einem der vorhergehenden Ansprüche,
**dadurch gekennzeichnet,**
**dass** bei parallelem Vorliegen mehrerer erfüllter Bedingungen (CD1, CD4) die Aktionen (ACT1, ACT4) mit Prioritätsnummern (PR3, PR2) versehen werden, durch die eine Reihenfolge der zu steuernden Aktionen festgelegt wird.

6. Verfahren nach Anspruch 4 oder 5,
**dadurch gekennzeichnet,**
**dass** bei parallelem Vorliegen mehrerer erfüllter Bedingungen (CD2, CD3, CD4) Sperrinformationen (EXC3, EXC4) verwendet werden, durch die jeweils eine Aktion (ACT3, ACT4) durch eine andere Aktion (ACT2, ACT3) von der Steuerung ausgeschlossen wird.

7. Verfahren nach Anspruch 6,
**dadurch gekennzeichnet,**
**dass** die Sperrinformationen (EXC3, EXC4) in eine Tabelle (TEX) eingetragen werden, die sich in der Mobilvermittlungsstelle (MSC) oder in einer Teilnehmerdatenbasis der Mobilvermittlungsstelle befindet.

8. Verfahren nach einem der vorhergehenden Ansprüche,
**dadurch gekennzeichnet,**
**dass** als anrufbezogene Daten die Art (CTY) des Anrufs (CA) oder die Art der Nachrichtenübertragung (USSD) bewertet werden.

9. Verfahren nach einem der vorhergehenden Ansprüche,
**dadurch gekennzeichnet,**
**dass** als teilnehmerspezifische Daten die internationale Funkteilnehmerkennung (IMSI), das Diensteklassenzeichen (SCM) zum Triggern von Diensten eines Intelligenten Netzes, die Funkteilnehmerkategorie (CAT) oder die vom Funkteilnehmer nutzbaren Zusatzdienste bewertet werden.

10. Verfahren nach einem der vorhergehenden Ansprüche,
**dadurch gekennzeichnet,**
**dass** bei einem abgehenden Anruf (MOC) die vom Funkteilnehmer gewählte Teilnehmerrufnummer oder ein Nummernbereich (COD) der gewählten Teilnehmerrufnummer und bei dem ankommenden Anruf (MTC) die im Mobilfunksystem vergebene Aufenthaltsrufnummer oder ein Nummernbereich der Aufenthaltsrufnummer bewertet wird.

11. Verfahren nach einem der vorhergehenden Ansprüche,
**dadurch gekennzeichnet,**
**dass** bei einem ankommenden Anruf mit Anrufumlenkung (CF) zu einer Zielrufnummer die Zielrufnummer oder ein Nummernbereich (COD) der Zielrufnummer bewertet wird.

12. Verfahren nach einem der vorhergehenden Ansprüche,
**dadurch gekennzeichnet,**
**dass** als Aktion das Sperren des Anrufs oder das Unterdrücken einer Anrufumlenkung oder das Sperren der Nachrichtenübertragung teilnehmerabhängig gesteuert wird.

13. Verfahren nach einem der vorhergehenden Ansprüche,
**dadurch gekennzeichnet,**
**dass** als Aktionen (ACT4, ACT 3) das Auslösen des Anrufs oder das Routen des Anrufs zu einer Ansageeinrichtung teilnehmerabhängig gesteuert werden.

14. Verfahren nach einem der vorhergehenden Ansprüche,
**dadurch gekennzeichnet,**
**dass** als Aktionen (ACT1, ACT2) das Routen der Anrufverbindung zu einem speziellen Ziel oder das Erfassen der Anrufgebühren in einer speziellen Gebührenzone teilnehmerabhängig gesteuert werden.

15. Verfahren nach einem der vorhergehenden Ansprüche,
**dadurch gekennzeichnet,**
**dass** als Aktion (ACT5) das Routen der Anrufverbindung zu einer Dienstesteuerungsstelle eines Intelligenten Netzes (IN) teilnehmerabhängig gesteuert und dabei das Diensteklassenzeichen (SCM) vor die Zielrufnummer gesetzt wird.

16. Verfahren nach einem der vorhergehenden Ansprüche,
**dadurch gekennzeichnet,**
**dass** als Aktion eine Rufnummernmodifikation durch Einfügen von teilnehmerindividuellen Informationen in die gewählte Rufnummer bei einem abgehenden Anruf (MOC), in die Aufenthaltsrufnummer bei einem ankommenden Anruf (MTC) oder in die Zielrufnummer bei einem ankommenden Anruf mit Anrufumlenkung (CF) teilnehmerabhängig gesteuert wird.

17. Verfahren nach einem der vorhergehenden Ansprüche,
**dadurch gekennzeichnet,**
**dass** als Aktionen ein Abhören der Anrufverbindung oder eine Berechtigung bzw. Unterdrückung von Diensten/ Leistungsmerkmalen teilnehmerabhängig gesteuert werden.

18. Verfahren nach einem der vorhergehenden Ansprüche,
**dadurch gekennzeichnet,**
**dass** als Aktion eine Umwertung eines vom Teilnehmer gewählten Kurzcodes in eine Rufnummer teilnehmerabhängig gesteuert wird.

19. Mobilfunksystem zur Steuerung von vermittlungstechnischen Aktionen (ACT1...ACT5), wie z.B. das Routen von Anrufverbindungen oder das Erfassen der Anrufgebühren usw., mit zumindestens einem funktechnischen Teilsystem(BSS), das Basisstationssteuerungen (BSC) und Basisstationen (BTS) für Funkverbindungen von und zu Mobilstationen (MS) von Funkteilnehmern aufweist, einem vermittlungstechnischen Teilsystem (SSS), das Teilnehmerdatenbasen (VLR, HLR) und Mobilvermittlungsstellen (MSC) für leitungsvermittelte Verbindungen aufweist, und einem Betriebs- und Wartungsteilsystem (OMC) mit zumindestens einem Betriebs- und Wartungszentrum (OMC) zum Verwalten und Steuern der in dem funktechnischen Teilsystem (BSS) und in dem vermittlungstechnischen Teilsystem (SSS) vorgesehenen Einrichtungen,
**dadurch gekennzeichnet,**
**dass** in der Mobilvermittlungsstelle (MSC) für einen oder mehrere Funkteilnehmer über das Betriebs- und Wartungsteilsystem (OMS) jeweils bereitgestellte mobilfunkspezifische Daten zur Festlegung von Bedingungen (CD1...CD6) für eine teilnehmerabhängige Steuerung der Aktionen (ACT1...ACT5) teilnehmerindividuell eingerichtet sind und dass die Mobilvermittlungsstelle (MSC) über Mittel (SDFC) verfügt, die bei einem ankommenden Anruf (MTC) oder einem abgehenden Anruf (MOC) oder bei einer Nachrichtenübertragung (USSD) jeweils anrufbezogene Daten und/ oder teilnehmerspezifische Daten in Bezug auf die Bedingungen auswertet und bei erfüllter Bedingung zumindestens eine Aktion (ACT1...ACT5) teilnehmerabhängig steuert.

## Claims

1. Method for controlling switching actions (ACT1..-ACT5), such as the routing of calling connections or the recording of call charges etc., in a mobile radio system (PLMN), which has at least one radio subsystem (BSS) with base station controllers (BSC) and base stations (BTS) for radio connections from and to mobile stations (MS) of radio subscribers, a switching subsystem (SSS) with subscriber databases (VLR, HLR) and mobile switching centres (MSC) for line-switching connections, and an operation and maintenance subsystem (OMS) having at least one operation and maintenance centre (OMC) for administering and controlling the devices provided in the radio subsystem (BSS) and in the switching subsystem (SSS),
**characterized**
**in that** mobile-radio-specific data (MD) for defining conditions (CD1...CD6) for subscriber-dependent control of the actions (ACT1...ACT5) is in each case set up on a subscriber-specific basis in the mobile switching centre (MSC), via the operation and maintenance subsystem (OMS) for one or more radio subscribers, and
**in that**, when an incoming call (MTC) or an outgoing call (MOC) occurs, or when a message is transmitted (USSD), call-related data and/or subscriber-specific data is evaluated by the mobile switching centre (MSC) with respect to the conditions (CD1...CD6) and, if the condition (CD2, CD3, CD4) is satisfied, at least one action (ACT2, ACT3, ACT4) is controlled on a subscriber-dependent basis.

2. Method according to Claim 1,
**characterized**
**in that** the conditions (CD1...CD6) for the subscriber-dependent control of the actions (ACT1...ACT5) are each defined by an individual call-related/subscriberspecific data item or by linking a number of call-related/subscriber-specific data items.

3. Method according to Claim 2,
**characterized**
**in that** the call-related/subscriber-specific data items are linked via a logic AND linking operation and/or via a logic OR linking operation.

4. Method according to one of the preceding claims,
**characterized**
**in that**, if a number of conditions (CD2, CD3, CD4) are satisfied, different actions (ACT2, ACT3, ACT4) are controlled on a subscriber-dependent basis.

5. Method according to one of the preceding claims,
**characterized**
**in that**, if a number of satisfied conditions (CD1, CD4) are present in parallel, the actions (ACT1, ACT4) are provided with priority numbers (PR3, PR2), by means of which a sequence of actions to be controlled is defined.

6. Method according to Claim 4 or 5,
**characterized**
**in that**, if a number of satisfied conditions (CD2, CD3, CD4) are present in parallel, blocking information (EXC3, EXC4) is used, by means of which in each case one action (ACT3, ACT4) is excluded from the control process by another action (ACT2, ACT3).

7. Method according to Claim 6,
**characterized**
**in that** the blocking information (EXC3, EXC4) is entered in a table (TEX) which is located in the mobile switching centre (MSC) or in a subscriber database in the mobile switching centre.

8. Method according to one of the preceding claims,
**characterized**
**in that** the nature (CTY) of the call (CA) or the nature of the message transmission (USSD) is assessed as call-related data.

9. Method according to one of the preceding claims,
**characterized**
**in that** the international radio subscriber identification (IMSI), the service class symbol (SCM) for triggering services in an intelligent network, the radio subscriber category (CAT) or the additional services which can be used by the radio subscriber is or are assessed as the subscriber-specific data.

10. Method according to one of the preceding claims,
**characterized**
**in that**, in the case of an outgoing call (MOC), the subscriber telephone number dialled by the radio subscriber or a number range (COD) of the dialled subscriber telephone number is assessed and, in the case of an incoming call (MTC), the location telephone number allocated in the mobile radio system or a number range of the location telephone number is assessed.

11. Method according to one of the preceding claims,
**characterized**
**in that**, in the case of an incoming call with call forwarding (CF) to a destination telephone number, the destination telephone number or a number range (COD) of the destination telephone number is assessed.

12. Method according to one of the preceding claims,
**characterized**
**in that** the blocking of the call or the suppression of call forwarding or the blocking of message transmission is controlled on a subscriber-dependent basis as an action.

13. Method according to one of the preceding claims,
**characterized**
**in that** the initiation of the call or the routing of the call to an announcement device is controlled on a subscriber-dependent basis as actions (ACT4, ACT3).

14. Method according to one of the preceding claims,
**characterized**
**in that** the routing of the call connection to a specific destination or the recording of the call charges in a specific charge zone is controlled on a subscriber-dependent basis as actions (ACT1, ACT2).

15. Method according to one of the preceding claims,
**characterized**
**in that** the routing of the call connection to a service control centre in an intelligent network (IN) is controlled on a subscriber-dependent basis as an action (ACT5) and, in the process, the service class symbol (SCM) is placed in front of the destination telephone number.

16. Method according to one of the preceding claims,
**characterized**
**in that** a call number modification is controlled as an action on a subscriber-dependent basis by inserting subscriber-specific information into the dialled telephone number in the case of an outgoing call (MOC), into the location telephone number in the case of an incoming call (MTC), or into the destination telephone number in the case of an incoming call with call forwarding (CF).

17. Method according to one of the preceding claims,
**characterized**
**in that** monitoring of the call connection or authorization and/or suppression of services/service features is or are controlled on a subscriber-dependent basis as actions.

18. Method according to one of the preceding claims,
**characterized**
**in that** a short code dialled by the subscriber is converted on a subscriber-dependent basis to a telephone number, as an action.

19. Mobile radio system for controlling switching actions (ACT1...ACT5), such as the routing of call connections or the recording of call charges etc., having at least one radio subsystem (BSS), which has base station controllers (BSC) and base stations (BTS) for radio connections from and to mobile stations (MS) of radio subscribers, having a switching subsystem (SSS) which has subscriber databases (VLR, HLR) and mobile switching centres (MSC) for line-switching connections, and having an operation and maintenance subsystem (OMC) having at least one operation and maintenance centre (OMC) for administering and controlling the devices provided in the radio subsystem (BSS) and in the switching subsystem (SSS),
**characterized**
**in that** mobile-radio-specific data, which is in each case provided for one or more radio subscribers via the operation and maintenance subsystem (OMS), is set up in the mobile switching centre (MSC) in order to define conditions (CD1...CD6) for subscriber-dependent control of the actions (ACT1...ACT5) on a subscriber-specific basis, and in that the mobile switching centre (MSC) has means (SDFC) which, in the case of an incoming call (MTC) or an outgoing call (MSC), or in the case of message transmission (USSD), in each case evaluates call-related data and/or subscriber-specific data with respect to the conditions and, if a condition is satisfied, controls at least one action (ACT1...ACT5) on a subscriber-dependent basis.

## Revendications

1. Procédé pour la commande d'actions de commutation (ACT1, ..., ACT5), par exemple le routage de liaisons d'appel ou le calcul de redevances d'appel, etc., dans un système de radiocommunication mobile (PLMN) qui présente au moins un système partiel (BSS) de radiocommunication avec des commandes de station de base (BSC) et des stations de base (BTS) pour des liaisons de radiocommunication depuis et vers des postes mobiles (MS) d'abonnés de radiocommunication, un système partiel (SSS) de communtation avec des bases de données d'abonnés (VLR, HLR) et des centraux de commutation mobile (MSC) pour des liaisons commutées par fil et un système partiel (OMS) d'exploitation et de maintenance avec au moins un central d'exploitation et de maintenance (OMC) pour l'administration et la commande des dispositifs prévus dans le système partiel (BSS) de radiocommunication et dans le système partiel (SSS) de commutation,
**caractérisé en ce que** des données spécifiques (MD) de radiocommunication mobile pour la définition de conditions (CD1, ..., CD6) d'une commande des actions (ACT1, ..., ACT5) en fonction de l'abonné sont établies pour un ou plusieurs abonnés de radiocommunication, individuellement pour chaque abonné, dans le central de commutation mobile (MSC) par l'intermédiaire du système partiel (OMS) d'exploitation et de maintenance, et
**en ce que** les données concernant l'appel et/ou les données spécifiques à l'abonné sont évaluées par rapport aux conditions (CD1, ..., CD6) par le central de commutation mobile (MSC) dans le cas d'un appel entrant (MTC), dans le cas d'un appel sortant (MOC) ou dans le cas de la transmission d'un message (USSD), et lorsque la condition (CD2, CD3, CD4) est remplie, au moins une action (ACT2, ACT3, ACT4) est commandée en fonction de l'abonné.

2. Procédé selon la revendication 1, **caractérisé en ce que** les conditions (CD1, ..., CD6) de la commande des actions (ACT1, ..., ACT5) en fonction de l'abonné sont définies chaque fois par une donnée individuelle concernant l'appel ou spécifique à l'abonné ou par association de plusieurs données concernant l'appel ou spécifiques à l'abonné.

3. Procédé selon la revendication 2, **caractérisé en ce que** l'association de données concernant l'appel ou spécifiques à l'abonné s'effectue par une association logique "ET" et/ou par une association logique "OU".

4. Procédé selon l'une des revendications précédentes, **caractérisé en ce que** lorsque plusieurs conditions (CD2, CD3, CD4) sont remplies, les différentes actions (ACT2, ACT3, ACT4) sont commandées en fonction de l'abonné.

5. Procédé selon l'une des revendications précédentes, **caractérisé en ce qu'**en cas de présence en parallèle de plusieurs conditions remplies (CD1, CD4), les actions (ACT1, ACT4) sont dotées de numéros de priorité (PR3, PR2) par lesquels une succession des actions à commander est définie.

6. Procédé selon la revendication 4 ou 5, **caractérisé en ce qu'**en cas de présence en parallèle de plusieurs conditions remplies (CD2, CD3, CD4), on utilise des informations de blocage (EXC3, EXC4) par lesquelles la commande exclut à chaque fois une action (ACT3, ACT4) par une autre action (ACT2, ACT3).

7. Procédé selon la revendication 6, **caractérisé en ce que** les informations de blocage (EXC3, EXC4) sont introduites dans un tableau (TEX) qui se trouve dans le central de commutation mobile (MSC) ou dans une base de données d'abonnés du central de commutation mobile.

8. Procédé selon l'une des revendications précédentes, **caractérisé en ce que** comme données concernant l'appel, le type (CTY) de l'appel (CA) ou le type de la transmission d'un message (USSD) sont évalués.

9. Procédé selon l'une des revendications précédentes, **caractérisé en ce que** comme données spécifiques à l'abonné, l'identification internationale de l'abonné de radiocommunication (IMSI), l'identification de la classe de services (SCM) pour le déclenchement de services de réseau intelligent, la catégorie d'abonné de radiocommunication (CAT) ou les services supplémentaires que l'abonné de radiocommunication peut utiliser sont évaluées.

10. Procédé selon l'une des revendications précédentes, **caractérisé en ce qu'**en cas d'appel sortant (MOC), le numéro d'appel d'abonné sélectionné par l'abonné de radiocommunication ou une partie (COD) du numéro d'appel d'abonné sélectionné est évalué, et dans le cas d'un appel entrant (MTC), le numéro d'appel itinérant attribué dans le système de radiocommunication mobile ou une partie du numéro d'appel itinérant sont évalués.

11. Procédé selon l'une des revendications précédentes, **caractérisé en ce qu'**en cas d'appel entrant avec déviation d'appel (CF) vers un numéro d'appel cible, le numéro d'appel cible ou une partie (COD) du numéro partiel cible sont évalués.

12. Procédé selon l'une des revendications précédentes, **caractérisé en ce que** l'action commandée en fonction de l'abonné consiste en le blocage de l'appel ou en la suppression d'une déviation d'appel ou en le blocage de la transmission d'un message.

13. Procédé selon l'une des revendications précédentes, **caractérisé en ce que** les actions (ACT4, ACT3) qui sont commandées en fonction de l'abonné consistent en la coupure de l'appel ou en l'acheminement de l'appel vers un dispositif d'annonce.

14. Procédé selon l'une des revendications précédentes, **caractérisé en ce que** les actions (ACT1, ACT2) qui sont commandées en fonction de l'abonné consistent en l'acheminement de la liaison d'appel vers une cible particulière ou en le calcul des redevances d'appel dans une zone de redevance particulière.

15. Procédé selon l'une des revendications précédentes, **caractérisé en ce que** l'action (ACT5) commandée en fonction de l'abonné consiste en l'acheminement de la liaison d'appel vers un point de commande de services d'un réseau intelligent (IN), l'identification de la classe de services (SCM) étant placée devant le numéro d'appel cible.

16. Procédé selon l'une des revendications précédentes, **caractérisé en ce que** l'action commandée en fonction de l'abonné est une modification du numéro d'appel par insertion d'informations concernant individuellement l'abonné dans le numéro d'appel sélectionné dans le cas d'un appel sortant (MOC), dans le numéro d'appel itinérant dans le cas d'un appel entrant (MTC) ou dans le numéro d'appel cible dans le cas d'un appel entrant avec déviation d'appel (CF).

17. Procédé selon l'une des revendications précédentes, **caractérisé en ce que** les actions commandées en fonction de l'abonné consistent en l'écoute de la liaison d'appel ou en une autorisation ou suppression de services ou de caractéristiques de prestations.

18. Procédé selon l'une des revendications précédentes, **caractérisé en ce que** l'action commandée en fonction de l'abonné est une conversion du code court sélectionné par l'abonné en un numéro d'appel.

19. Système de radiocommunication mobile pour la commande d'actions (ACT1, ..., ACT5) de commutation, par exemple le routage de liaisons d'appel ou le calcul de redevances d'appel, etc., qui présente au moins un système partiel (BSS) de radiocommunication avec des commandes de station de base (BSC) et des stations de base (BTS) pour des liaisons de radiocommunication depuis et vers des postes mobiles (MS) d'abonnés de radiocommunication, un système partiel (SSS) de commutation avec des bases de données d'abonnés (VLR, HLR) et des centraux de commutation mobile (MSC) pour des liaisons commutées par fil et un système partiel (OMC) d'exploitation et de maintenance avec au moins un central d'exploitation et de maintenance (OMC) pour l'administration et la commande des dispositifs prévus dans le système partiel (BSS) de radiocommunication et dans le système partiel (SSS) de commutation,
**caractérisé en ce que**
pour un ou plusieurs abonnés de radiocommunication, des données spécifiques de radiocommunication mobile pour la définition de conditions (CD1, ..., CD6) pour une commande des actions (ACT1, ..., ACT5) en fonction de l'abonné, données mises à disposition par le système partiel d'exploitation et de maintenance (OMS), sont établies individuellement pour chaque abonné, dans le central de commutation mobile (MSC), et **en ce que** le central de commutation mobile (MSC) dispose de moyens (SDFC) qui, dans le cas d'un appel entrant (MTC) ou d'un appel sortant (MOC) ou dans le cas de la transmission d'un message (USSD), évalue des données concernant l'appel et/ou des données spécifiques à l'abonné par rapport aux conditions, et qui, lorsque la condition est remplie, commande au moins une action (ACT1, ..., ACT5) en fonction de l'abonné.
